# EUROPÄISCHE PATENTSCHRIFT

(11) **EP 4 133 922 B1**
(45) Veröffentlichungstag und Bekanntmachung des Hinweises auf die Patenterteilung: **26.02.2025**
(21) Anmeldenummer: 22168289.1
(22) Anmeldetag: 14.04.2022
(51) Int. Cl.: A01B 63/111, A01B 69/00, A01B 79/02

(54) **VERFAHREN ZUR ERMITTLUNG VON KOPPLUNGSFORMUNABHÄNGIGEN ARBEITSHÖHEN MEHRERER LANDWIRTSCHAFTLICHER ANBAUGERÄTE**
METHOD FOR DETERMINING COUPLING SHAPE INDEPENDENT WORKING HEIGHTS OF MULTIPLE AGRICULTURAL IMPLEMENTS
MÉTHODE DE DÉTERMINATION DES HAUTEURS DE TRAVAIL INDÉPENDANTES DE LA FORME D'ATTELAGE DE PLUSIEURS OUTILS AGRICOLES

(30) Priorität: 10.08.2021 DE 102021120758
(43) Veröffentlichungstag der Anmeldung: 15.02.2023
(73) Patentinhaber: CLAAS Tractor S.A.S., 78141 Vélizy-Villacoublay Cedex (FR)
(72) Erfinder: Wieckhorst, Jan Carsten, 29525 Uelzen Orsteil Hanstedt 2 (DE); Ehlert, Christian, 33719 Bielefeld (DE); Birkmann, Christian, 33775 Versmold (DE); Pieper, Jona, 59394 Nordkirchen (DE); Schaub, Christian, 33098 Paderborn (DE)
(74) Vertreter: CLAAS 365FarmNet GmbH

(56) Entgegenhaltungen:
- EP-A1- 3 434 087
- EP-A1- 3 729 939
- DE-A1- 102018 203 245

## Beschreibung

Die vorliegende Erfindung betrifft ein Verfahren zur Ermittlung von kopplungsformunabhängigen Arbeitshöhen mehrerer landwirtschaftlicher Anbaugeräte gemäß dem Oberbegriff von Anspruch 1, eine Sensoranordnung gemäß dem Oberbegriff von Anspruch 14 sowie eine landwirtschaftliche Arbeitsmaschine gemäß dem Anspruch 15.

Landwirtschaftliche Arbeitsmaschinen wie Mähdrescher, Feldhäcksler und Traktoren, können mit diversen Anbaugeräten kombiniert werden. Diese Anbaugeräte werden über eine Geräteschnittstelle an die landwirtschaftliche Arbeitsmaschine angebaut. Vorliegend stehen landwirtschaftliche Gespanne mit einer landwirtschaftlichen Arbeitsmaschine und einem landwirtschaftlichen Anbaugerät im Vordergrund, wobei das landwirtschaftliche Anbaugerät insbesondere ein eigenes Fahrzeug sein kann. Dieses wird vorzugsweise von der landwirtschaftlichen Arbeitsmaschine gezogen.

Derartige Anbaugeräte dienen allgemein der Durchführung einer landwirtschaftlichen Arbeitsaufgabe. Im Vordergrund stehen hier Feldbearbeitungen. Bei diesen Feldbearbeitungen kann es sich beispielsweise um Aussaat- oder Düngevorgänge handeln, um das Auftragen von Pflanzenschutzmittel, Bodenbearbeitungen wie das Pflügen oder Erntevorgänge wie das Mähen. Diesen Feldbearbeitungen ist gemeinsam, dass die Anbaugeräte dabei zumeist auf eine spezifische Arbeitshöhe eingestellt werden. Die Arbeitshöhe kann, beispielsweise beim Pflügen, auch einen negativen Wert annehmen und somit eine Arbeitstiefe sein. Der Erfolg und zum Teil der Energieverbrauch der Feldbearbeitung hängen dabei oft maßgeblich von der Arbeitshöhe ab. Gleichzeitig hängt diese jedoch von diversen Maschinenparametern des Anbaugeräts und der landwirtschaftlichen Arbeitsmaschine ab.

Beim Pflügen beispielsweise ist die Arbeitstiefe zum einen von Parametern abhängig, die je nach Pflug vom Benutzer manuell am Pflug eingestellt werden und zum anderen von Einstellungen der Geräteschnittstelle an der landwirtschaftlichen Arbeitsmaschine. Weiterhin haben auch eine Achslast und ein Reifendruck der landwirtschaftlichen Arbeitsmaschine indirekt über die Reifeneinfederung einen Einfluss auf die Arbeitstiefe des Pflugs. Zwar können moderne Pflüge zum Teil zumindest über hydraulische Zylinder grundsätzlich in der Arbeitstiefe variiert werden, allerdings fehlen die notwendigen Messdaten, um diese Einstellungen gezielt vorzunehmen. Ähnliche Probleme gibt es bei anderen landwirtschaftlichen Anbaugeräten.

In der Praxis werden für Feldbearbeitungen diverse Regelungstypen, insbesondere Zugkraftregelungen, Schlupfregelungen, Lageregelungen und Mischregelungen der Zugkraft- und Lageregelung, eingesetzt. Dabei stellt sich die Arbeitshöhe automatisch mit ein, wobei allerdings versucht wird, diese einigermaßen konstant zu halten. Maschinenparameter der landwirtschaftlichen Arbeitsmaschine wie der Reifendruck werden üblicherweise nicht berücksichtigt. Dabei kommt also nur eine relative Arbeitshöhenmessung zum Einsatz. Diese relative Arbeitshöhenmessung bezieht sich bei einigen bekannten Systemen auf die landwirtschaftliche Arbeitsmaschine. Bei anderen bekannten Systemen (WO 2019/158454 A1) wird die Arbeitshöhe beziehungsweise Arbeitstiefe relativ zum Anbaugerät selbst gemessen.

Aus der DE 10 2018 203 245 A1 ist außerdem ein Verfahren zur Ermittlung von Arbeitshöhen landwirtschaftlicher Anbaugeräte mittels Auswertung von Kamerabildern bekannt, wobei eine Geräteschnittstelle erkannt wird und als Referenz mit in die Auswertung einfließt.

Es ist dabei eine Herausforderung, eine Arbeitshöhe kostengünstig zu ermitteln und/oder kostengünstig eine Möglichkeit zu bieten, auf die Arbeitshöhe Einfluss zu nehmen.

Der Erfindung liegt das Problem zugrunde, das bekannte Verfahren derart auszugestalten und weiterzubilden, dass hinsichtlich der genannten Herausforderung eine weitere Optimierung erreicht wird.

Das obige Problem wird durch die Merkmale des kennzeichnenden Teils von Anspruch 1 gelöst.

Wesentlich ist die grundsätzliche Überlegung, die Arbeitshöhe mehrerer, unterschiedlich gekoppelter Anbaugeräte mittels eines Sensors zu ermitteln. Durch diese Wiederverwendung eines Sensors zur Ermittlung der Arbeitshöhe wird es kostengünstig möglich, die Arbeitshöhe zu ermitteln und zu nutzen. Dabei wird vorgeschlagen, diesen Sensor derart auszugestalten, dass eine Arbeitshöhe ermittelt werden kann, die unabhängig von der gewählten Kopplungsform des Anbaugerätes ist. Insbesondere soll eine absolute Arbeitshöhe ermittelt werden.

Im Einzelnen wird vorgeschlagen, dass die Steueranordnung die kopplungsformunabhängigen Arbeitshöhen der unterschiedlich gekoppelten Anbaugeräte im gekoppelten Zustand unter Verwendung desselben Sensors ermittelt und dass die Steueranordnung die ermittelten kopplungsformunabhängigen Arbeitshöhen mittels der landwirtschaftlichen Arbeitsmaschine anzeigt und/oder zur Steuerung und/oder Regelung der landwirtschaftlichen Arbeitsmaschine verwendet, wobei eine kopplungsformunabhängige Arbeitshöhe eine Arbeitshöhe ist, die nicht relativ zur Geräteschnittstelle berechnet wird.

Gemäß Anspruch 2 kann vorgesehen sein, dass die Steueranordnung die Arbeitshöhe vollständig unabhängig von der Kopplungsform und vorzugsweise vollständig unabhängig von der Geräteschnittstelle ermittelt und/oder die Arbeitshöhe primär über den Sensor ermittelt. Dabei kann insbesondere die noch zu erläuternde modulare Sensorik zum Einsatz kommen. Vorteilhaft daran ist, dass die Datenverarbeitung deutlich erleichtert wird. Im besten Fall kann derselbe Algorithmus zur Ermittlung der Arbeitshöhe bei völlig unterschiedlichen Anbaugeräten und Kopplungsformen verwendet werden.

Die Ansprüche 3 und 4 geben zwei Möglichkeiten der Platzierung des Sensors an. Gemäß Anspruch 3 kann der Sensor dabei an der landwirtschaftlichen Arbeitsmaschine angebracht sein. Damit kann der Sensor beispielsweise dauerhaft an der landwirtschaftlichen Arbeitsmaschine verbleiben und die datentechnische Integration wird vereinfacht. Im Gegenzug steigt die Komplexität der Ermittlung der Arbeitshöhe.

Alternativ kann gemäß Anspruch 4 der Sensor reversibel an den Anbaugeräten montierbar sein. So kann auch ein teurer Sensor zur Ermittlung der Arbeitshöhe kosteneffizient verwendet werden, um die Arbeitshöhen mehrerer Anbaugeräte zu ermitteln. In vielen Fällen wird die Ermittlung der Arbeitshöhe am Anbaugerät selbst einfacher durchzuführen sein.

Die bevorzugten Ausgestaltungen des Sensors sind Gegenstand von Anspruch 5. Demnach kann der Sensor ein Abstandssensor sein, der insbesondere kontaktlos arbeitet. Durch die Anbringung eines Abstandssensors auf modulare Art und Weise an mehreren Anbaugeräten wird eine einfache, jedoch effektive Möglichkeit geschaffen, Arbeitshöhen mehrerer Anbaugeräte zu messen. Die angegebenen Typen von Sensoren sind für den Einsatz im landwirtschaftlichen Bereich besonders geeignet. Dabei muss berücksichtigt werden, dass der Sensor entsprechend robust, beispielsweise gegen Vibrationen, sein muss und auch bei höherer Staubentwicklung, Verschmutzungen, unterschiedlichen Temperaturen und in unterschiedlichen Umgebungen zuverlässig funktionieren sollte.

Es kann vorgesehen sein, dass die Anbaugeräte unterschiedliche Typen von Anbaugeräten umfassen. Diese Ausgestaltung ist Gegenstand von Anspruch 6. Je mehr Typen von Anbaugeräten unterstützt werden, desto höher ist die Kosteneffizienz des Sensors.

Diverse Anbaugeräte, beispielsweise Pflüge, weisen mehrere relevante Arbeitshöhen auf, da sie auch eine Längs- oder Querneigung aufweisen können. Gemäß Anspruch 7 kann daher vorgesehen sein, dass die Steueranordnung mehrere kopplungsformunabhängige Arbeitshöhen ermittelt. So kann eine homogene Feldbearbeitung sichergestellt werden.

Bei einer besonders bevorzugten Ausgestaltung gemäß Anspruch 8 regelt die Steueranordnung eine Arbeitshöhe des Anbaugerätes. Aufgrund der Ermittlung der kopplungsformunabhängigen Arbeitshöhe und der bevorzugten Nutzbarkeit der Sensoranordnung für diverse Anbaugeräte, die möglicherweise auch keine eigene Sensorik aufweisen, können so viele Zyklen der Feldbearbeitung optimiert werden. Es wird auch möglich, Arbeitshöhen diverser Arbeitsvorgänge aufeinander und/oder lokale Gegebenheiten des Feldes abzustimmen.

Weiter ist möglich, dass die Steueranordnung mindestens zwei Arbeitshöhen des Anbaugerätes regelt, womit die Feldbearbeitung noch präziser durchgeführt werden kann. So kann auch eine Längs- und/oder Querneigung des Anbaugerätes minimiert werden.

Anspruch 10 betrifft die Möglichkeit, zur Regelung der Arbeitshöhe Stellgrößen der landwirtschaftlichen Arbeitsmaschine und/oder des Anbaugerätes zu variieren, wobei insbesondere ein Maschinenparameter eines Dreipunkt-Krafthebers als Stellgröße dienen kann. Der Dreipunkt-Kraftheber hat einen wesentlichen Einfluss auf die Arbeitshöhen diverser Anbaugeräte und steht gleichzeitig anbaugeräteunabhängig unter der Kontrolle der landwirtschaftlichen Arbeitsmaschine.

Anspruch 11 gibt mehrere Anbaugeräte mit möglichen Stellgrößen für die Regelung an, bei denen eine korrekt eingestellte Arbeitshöhe besonders relevant ist.

Es ist auch möglich, die Arbeitshöhe an einer Position des Anbaugerätes zu ermitteln, die vor einer Position der Feldbearbeitung des Anbaugerätes liegt. Dadurch kann eine vorausschauende Regelung erzielt werden. Diese Ausgestaltungen sind Gegenstand von Anspruch 12.

Anspruch 13 schließlich betrifft die Möglichkeit, die Soll-Arbeitshöhe der Regelung während der Feldbearbeitung zu variieren. Herkömmlicherweise wird oft mit konstanten Arbeitshöhen oder Arbeitshöhen, die sich in Abhängigkeit einer Regelung eines anderen Parameters verändern, gearbeitet. Mit der vorschlagsgemäßen Lösung wird es möglich, die Arbeitshöhe flexibel an die Gegebenheiten des Feldes anzupassen. Dies trägt dem Umstand Rechnung, dass der Boden und der Bewuchs eines Feldes keineswegs homogen sind.

Nach einer weiteren Lehre gemäß Anspruch 14, der eigenständige Bedeutung zukommt, wird eine Sensoranordnung zur Ermittlung von kopplungsformunabhängigen Arbeitshöhen mehrerer landwirtschaftlicher Anbaugeräte, wobei die Sensoranordnung mindestens einen Sensor zur Aufnahme von Messdaten und eine Steueranordnung aufweist, wobei die Anbaugeräte über mindestens eine Geräteschnittstelle durch unterschiedliche Kopplungsformen mit einer landwirtschaftlichen Arbeitsmaschine koppelbar sind, beansprucht.

Dabei ist wesentlich, dass die Steueranordnung eingerichtet ist, die kopplungsformunabhängigen Arbeitshöhen der unterschiedlich gekoppelten Anbaugeräte im gekoppelten Zustand unter Verwendung desselben Sensors zu ermitteln und dass die Steueranordnung eingerichtet ist, die ermittelten kopplungsformunabhängigen Arbeitshöhen mittels der landwirtschaftlichen Arbeitsmaschine anzuzeigen und/oder zur Steuerung und/oder Regelung der landwirtschaftlichen Arbeitsmaschine zu verwenden, wobei eine kopplungsformunabhängige Arbeitshöhe eine Arbeitshöhe ist, die nicht relativ zur Geräteschnittstelle berechnet wird.

Auf alle Ausführungen zu dem vorschlagsgemäßen Verfahren darf verwiesen werden. Nach einer weiteren Lehre gemäß Anspruch 15, der ebenfalls eigenständige Bedeutung zukommt, wird eine landwirtschaftliche Arbeitsmaschine mit einer vorschlagsgemäßen Sensoranordnung beansprucht.

Auf alle Ausführungen zu dem vorschlagsgemäßen Verfahren und der vorschlagsgemäßen Sensoranordnung darf verwiesen werden.

Im Folgenden wird die Erfindung anhand einer lediglich Ausführungsbeispiele darstellenden Zeichnung näher erläutert. In der Zeichnung zeigt
- Fig. 1: eine landwirtschaftliche Flotte mit der vorschlagsgemäßen Sensoranordnung während der Durchführung des vorschlagsgemäßen Verfahrens,
- Fig. 2: in a) bis d) unterschiedliche Anbaugeräte, mit denen das vorschlagsgemä-ße Verfahren durchgeführt werden kann und
- Fig. 3: schematisch die Regelung von Arbeitshöhen eines als Pflug ausgestalteten Anbaugerätes.

Die vorschlagsgemäße Lösung lässt sich auf einen weiten Bereich landwirtschaftlicher Arbeitsmaschinen 1, insbesondere selbstfahrender landwirtschaftlicher Arbeitsmaschinen 1, anwenden. Dazu gehören Zugmaschinen, insbesondere Traktoren, und Erntemaschinen, insbesondere Mähdrescher, Feldhäcksler o.dgl.

Bei dem dargestellten und insoweit bevorzugten Ausführungsbeispiel handelt es sich bei der landwirtschaftlichen Arbeitsmaschine 1 um einen Traktor. Die Arbeitsmaschine 1 lässt sich über mindestens eine Geräteschnittstelle 2 mit mindestens einem Anbaugerät 3 bestücken. Bei der Geräteschnittstelle 2 handelt es sich hier ganz allgemein um eine mechanische Kupplung zwischen der Arbeitsmaschine 1 und dem Anbaugerät 3. Bei dem dargestellten und insoweit bevorzugten Ausführungsbeispiel ist die Geräteschnittstelle 2 als Dreipunkt-Kraftheber 4 ausgestaltet, der für die Kopplung mit dem Anbaugerät 3 zwei Unterlenker 5 und einen Oberlenker 6 aufweist. Die Geräteschnittstelle 2 kann als Front- oder Heckkraftheber ausgestaltet sein. Grundsätzlich kann es sich bei der Geräteschnittstelle 2 aber auch um ein Zugpendel handeln. Andere Varianten für die Geräteschnittstelle 2 sind Systeme mit einfacher Zugzapfenkupplung, mit Hitch Haken, mit Kugelkopfkupplung oder dergleichen.

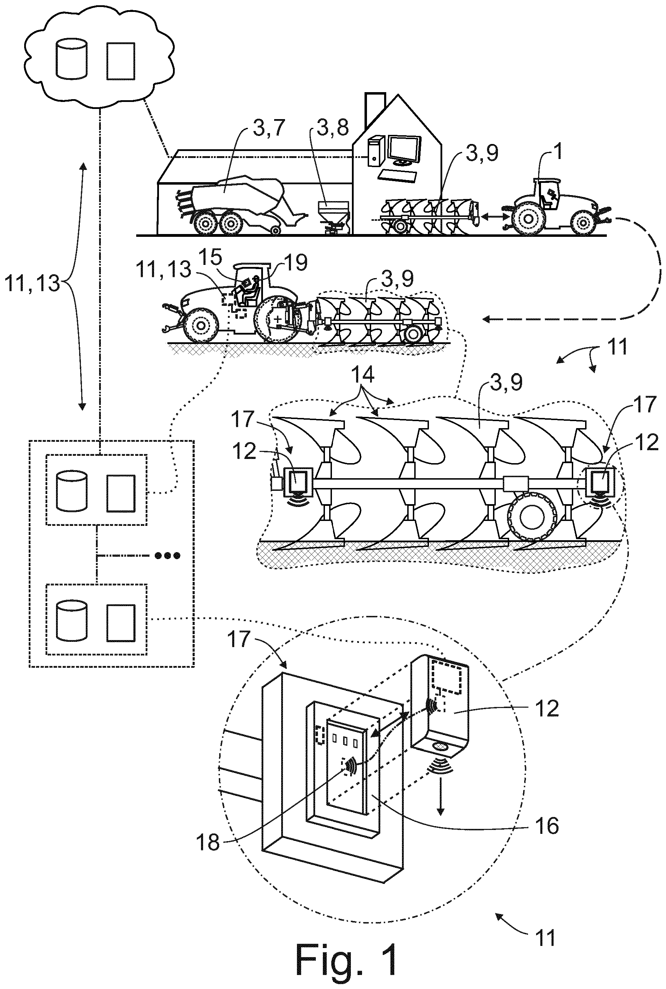

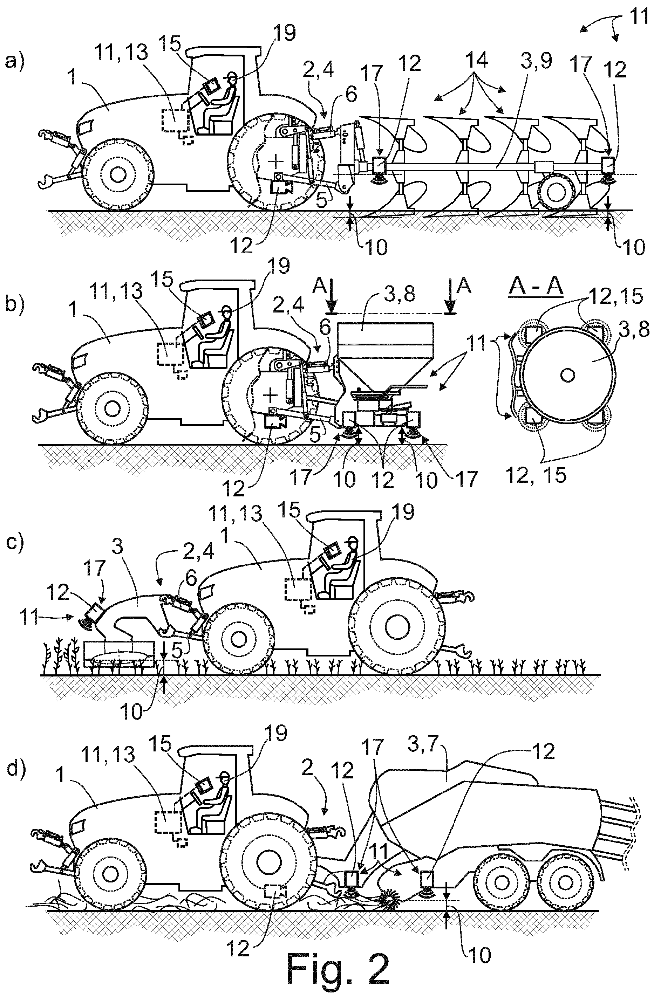

Fig. 1 zeigt mehrere landwirtschaftliche Anbaugeräte 3, die in dem vorschlagsgemäßen Verfahren verwendbar sind, konkret eine Ballenpresse 7, einen Kunstdüngerstreuer 8 und einen Pflug 9. In Fig. 2 sind diese in Aktion dargestellt.

Das in den Figuren dargestellte und insoweit bevorzugte Ausführungsbeispiel betrifft ein Verfahren zur Ermittlung von kopplungsformunabhängigen Arbeitshöhen 10 mehrerer landwirtschaftlicher Anbaugeräte 3 mittels einer Sensoranordnung 11, wobei die Sensoranordnung 11 mindestens einen Sensor 12 zur Aufnahme von Messdaten und eine Steueranordnung 13 aufweist, wobei die Anbaugeräte 3 über mindestens eine Geräteschnittstelle 2 durch unterschiedliche Kopplungsformen mit einer landwirtschaftlichen Arbeitsmaschine 1 koppelbar sind und wobei die Anbaugeräte 3 zeitweise durch die unterschiedlichen Kopplungsformen mit der landwirtschaftlichen Arbeitsmaschine 1 gekoppelt werden.

Die Messdaten werden vom Sensor 12 an die Steueranordnung 13 übertragen. Die unterschiedlichen Kopplungsformen können eine unterschiedlichen Nutzung derselben Geräteschnittstelle 2, die Anbindung unterschiedlicher Anbaugeräte 3 und/oder unterschiedliche Geräteschnittstellen 2 betreffen. Vorliegend werden im vorschlagsgemäßen Verfahren zumindest zwei unterschiedliche Kopplungsformen genutzt. Diese können selbstverständlich zu unterschiedlichen Zeitpunkten genutzt werden. Beispielsweise kann ein Pflug 9 zum Beginn der Saison an einem Heckkraftheber befestigt sein, während ein Mähwerk während der Ernte am Frontkraftheber befestigt sein kann.

Erfindungsgemäss ist mit dem Begriff "kopplungsformunabhängige Arbeitshöhe eine Arbeitshöhe 10 gemeint, die nicht relativ zur Geräteschnittstelle 2 berechnet wird. Konkret sollte beispielsweise eine unvollständige Kopplung oder eine Änderung der Kopplung, sofern diese die Messung nicht stört, keinen Einfluss auf die ermittelte Arbeitshöhe 10 haben.

Die Sensoranordnung 11 kann als solche eigenständig oder zumindest teilweise in die landwirtschaftliche Arbeitsmaschine 1 integriert sein. Insbesondere kann die Steueranordnung 13 der Sensoranordnung 11 beispielsweise eine Steueranordnung 13 der landwirtschaftlichen Arbeitsmaschine 1 sein. Genauso kann diese jedoch auch aus verteilten Recheneinheiten bestehen. Sie kann beispielsweise eine Steuereinheit der landwirtschaftlichen Arbeitsmaschine 1 und eine Cloud-Steuereinheit aufweisen.

Mittels des Sensors 12 wird vorzugsweise als kopplungsformunabhängige Arbeitshöhe 10 eine absolute Arbeitshöhe 10 gemessen. Unter dem Begriff "absolut" wird nicht zwingend eine hochgenaue Messung verstanden, sondern allgemeine eine Messung relativ zum Boden. Dabei ist grundsätzlich denkbar, dass die Messung relativ zu einem Bauteil erfolgt, dessen Höhe relativ zum Boden wiederum bekannt ist, vorzugsweise wird die absolute Arbeitshöhe 10 jedoch direkt relativ zum Boden gemessen. Es kann sich auch um eine Arbeitstiefe handeln, wenn das Anbaugerät 3 in den Boden eingreift. Grundsätzlich betrifft die Arbeitshöhe 10 ein Bauteil des landwirtschaftlichen Anbaugerätes 3, das zur Feldbearbeitung dient. Diese Feldbearbeitung kann allerdings auch eine Aussaat oder dergleichen sein. Beispielsweise betrifft die absolute Arbeitshöhe 10 also den Abstand einer Pflugschar 14 zum Boden, in diesem Fall dann zumeist als Arbeitstiefe, den Abstand eines Auslasses eines Kunstdüngerstreuers 8 oder Spritzgerätes zum Boden oder dergleichen. Im Fokus eines besonders bevorzugten Ausführungsbeispiels stehen hier die Bodenbearbeitungsgeräte, weshalb die Arbeitshöhe 10 vorzugsweise eine Arbeitstiefe ist.

Die Übertragung der Messdaten von dem Sensor 12 an die Steueranordnung 13 kann grundsätzlich auf beliebige Art und Weise stattfinden. Insbesondere muss der Sensor 12 die Daten nicht aktiv senden, sie können auch ausgelesen werden. Vorzugsweise findet die Übertragung regelmäßig und/oder kontinuierlich statt.

Wesentlich ist nun, dass die Steueranordnung 13 die kopplungsformunabhängigen Arbeitshöhen 10 der unterschiedlich gekoppelten Anbaugeräte 3 im gekoppelten Zustand unter Verwendung desselben Sensors 12 ermittelt und dass die Steueranordnung 13 die ermittelten kopplungsformunabhängigen Arbeitshöhen 10 mittels der landwirtschaftlichen Arbeitsmaschine 1 anzeigt und/oder zur Steuerung und/oder Regelung der landwirtschaftlichen Arbeitsmaschine 1 und/oder des landwirtschaftlichen Anbaugerätes 3 verwendet, wobei eine kopplungsformunabhängige Arbeitshöhe eine Arbeitshöhe ist, die nicht relativ zur Geräteschnittstelle berechnet wird.

Ein Beispiel der Regelung des landwirtschaftlichen Anbaugerätes 3 über die landwirtschaftliche Arbeitsmaschine 1 wird im Folgenden noch erläutert. Eine Steuerung kann analog dazu definiert werden. Die Anzeige der kopplungsformunabhängigen Arbeitshöhe 10 geschieht vorzugsweise auf einem Terminal 15 der landwirtschaftlichen Arbeitsmaschine 1, kann aber genauso auch auf einem Smartphone, einem Tablet, einem Laptop, einer Smartwatch oder dergleichen geschehen.

Wesentlich ist dabei die Nutzung desselben Sensors 12. Wie noch erläutert wird, kann sich dieser Sensor 12 an der landwirtschaftlichen Arbeitsmaschine 1 befinden. Eine weitere bevorzugte Möglichkeit ist die Wiederverwendung des Sensors 12 an verschiedenen Anbaugeräten 3. Auch dies wird noch näher erläutert. Die Figuren zeigen beide Möglichkeiten und insgesamt jeweils mehrere Sensoren 12. Genauso kann jedoch auch nur einer der gezeigten Sensoren 12 vorhanden sein.

Zusätzlich besteht die Möglichkeit, dass die Steueranordnung 13 die kopplungsformunabhängigen Arbeitshöhen 10, zumindest teilweise, dokumentiert, insbesondere in eine Dokumentation einer Feldbearbeitung übernimmt.

Weiter ist hier und vorzugsweise vorgesehen, dass die Steueranordnung 13 die Arbeitshöhe 10 vollständig unabhängig von der Kopplungsform und vorzugsweise vollständig unabhängig von der Geräteschnittstelle 2 ermittelt. Zusätzlich oder alternativ kann vorgesehen sein, dass die Steueranordnung 13 die Arbeitshöhen 10 primär, vorzugsweise ausschließlich, über den Sensor 12 ermittelt.

Unter dem Begriff "vollständig unabhängig" ist zu verstehen, dass keine Eigenschaften, Parameter, Einstellungen und dergleichen der Kopplungsform respektive Geräteschnittstelle 2 bei der Ermittlung der Arbeitshöhe 10 berücksichtigt werden. Unabhängig davon können Einstellungen der Geräteschnittstelle 2 allerdings Stellgrößen der noch zu erläuternden Regelung sein.

Wird die Arbeitshöhe 10 primär über den Sensor 12 ermittelt, können andere Sensoren 12 unterstützend herangezogen werden. Eine Stereokamera hingegen würde hier als ein Sensor 12 zählen. Eine Ermittlung der Arbeitshöhe 10 aus einer Vielzahl von Parametern, unter anderem einem Reifendrucksensor beispielsweise, zählt nicht als Ermittlung primär über den Reifendrucksensor.

Im Folgenden werden nun zwei Ausführungsbeispiele des Sensors 12 erläutert. Dabei ist der Sensor 12 entweder an der landwirtschaftlichen Arbeitsmaschine 1 angebracht oder an dem landwirtschaftlichen Anbaugerät 3. Grundsätzlich spricht allerdings nichts dagegen, Sensoren 12 an der landwirtschaftlichen Arbeitsmaschine 1 und dem landwirtschaftlichen Anbaugerät 3 anzubringen.

Es kann vorgesehen sein, dass der Sensor 12 an der landwirtschaftlichen Arbeitsmaschine 1 angebracht ist, vorzugsweise, dass der Sensor 12 ein optischer Sensor 12, insbesondere eine Kamera, ist.

Die Kamera ist vorzugsweise eine Stereokamera. Dabei kann ganz grundsätzliche vorgesehen sein, dass der Sensor 12 an der landwirtschaftlichen Arbeitsmaschine 1 die Arbeitshöhe 10 kontaktlos am Anbaugerät 3 misst. Es kann vorgesehen sein, dass dabei keine Maschinenparameter der landwirtschaftlichen Arbeitsmaschine 1 berücksichtigt werden. Insbesondere kann allerdings vorgesehen sein, dass eine Positionierung des Sensors 12 bei der Ermittlung der Arbeitshöhe 10 berücksichtigt wird. Auch Informationen über Art und Typ des landwirtschaftlichen Anbaugeräts 3 können berücksichtigt werden.

Im Folgenden wird die bereits erwähnte modulare Sensorik am Anbaugerät 3 näher erläutert.

Im Rahmen der modularen Sensorik kann vorgesehen sein, dass der Sensor 12 reversibel an den Anbaugeräten 3 montierbar ist und dass der Sensor 12 zur Ermittlung der Arbeitshöhe 10 mehrerer Anbaugeräte 3 genutzt wird und dafür jeweils an dem Anbaugerät 3 montiert wird.

Die Sensoranordnung 11 kann mindestens eine Sensorhalterung 16 aufweisen, wobei der Sensor 12 mittels der mindestens einen Sensorhalterung 16 jeweils an einer Montageposition 17 an unterschiedlichen Anbaugeräten 3 reversibel montiert wird, wobei der Sensor 12 im montierten Zustand eine Arbeitshöhe 10 des Anbaugerätes 3 betreffende Messdaten aufnimmt und an die Steueranordnung 13 überträgt und wobei die Steueranordnung 13 aus einem montagepositionsspezifischen Kalibrationsdatensatz die Arbeitshöhe 10 des jeweiligen Anbaugerätes 3 ermittelt.

Die Montage des Sensors 12 mittels der Sensorhalterung 16 an der Montageposition 17 erfolgt derart, dass die Montage zerstörungsfrei reversibel ist. Insbesondere erfolgt sie auch nicht im Rahmen der Herstellung des Anbaugerätes 3, sondern ist vorzugsweise vor Ort auf dem Feld mit einfachen Hilfsmitteln oder ganz ohne Hilfsmittel möglich.

Der Kalibrationsdatensatz kann, wie noch erläutert wird, grundsätzlich in einem beliebigen Speicher hinterlegt sein, neu erstellt werden oder der Steueranordnung 13 anderweitig zur Verfügung stehen.

Eine vorteilhafte Anwendung der modularen Sensorik betrifft auch die Messung der Arbeitshöhe 10 bei einem Anbaugerät 3, das keine eigene Elektronik aufweist. Wie sich im Folgenden noch ergibt, kann die Sensoranordnung 11 insofern autark von dem Anbaugerät 3 sein. Alternativ kann vorgesehen sein, dass der Sensor 12 nicht mit dem Anbaugerät 3 kommuniziert. Genauso kann jedoch vorgesehen sein, dass der Sensor 12 in eine Elektronik des Anbaugerätes 3 integriert wird oder mit dieser kommuniziert. Auch bei Anbaugeräten 3 mit Elektronik kann jedoch vorgesehen sein, dass der Sensor 12 nicht direkt mit dem Anbaugerät 3 kommuniziert. Bevorzugt ist, dass die Sensoranordnung 11 mit Anbaugeräten 3 mit und ohne Elektronik verwendbar ist. Insgesamt kann sogar vorgesehen sein, dass die Ermittlung der Arbeitshöhe 10, abgesehen von der Kalibration selbst, vollständig unabhängig von dem landwirtschaftlichen Anbaugerät 3 ist.

Vorzugsweise ist es so, dass die montagepositionsspezifischen Kalibrationsdatensätze eine Referenzhöhe und/oder eine Ausrichtung des Sensors 12 im montierten Zustand an der jeweiligen Montageposition 17 und/oder eine Lokalisierung der Montageposition 17 relativ zum Anbaugerät 3 umfassen.

Die Referenzhöhe kann aus einer noch zu erläuternden Kalibrationsroutine stammen und betrifft eine Höhe der Montageposition 17 des Sensors 12 in einem Referenzzustand, vorzugsweise bei einer bekannten Arbeitshöhe 10. Die Ausrichtung des Sensors 12 kann beispielsweise eine Verkippung des Sensors 12 sein. Damit kann berücksichtigt sein, dass der Sensor 12 gegebenenfalls nicht den kürzesten Abstand zum Boden misst. Die Lokalisierung der Montageposition 17 relativ zum Anbaugerät 3 kann aus einer Gruppe von vorgegebenen Montagepositionen 17 gewählt sein oder anderweitig bestimmt werden. Fig. 1 beispielsweise stellt zwei Montagepositionen 17 an einem Pflug 9 dar. Auch Fig. 2 zeigt mehrere mögliche Montagepositionen 17 an unterschiedlichen Anbaugeräten 3. Wie noch erläutert wird, ergibt sich auch die Möglichkeit, pro Anbaugerät 3 mehrere Arbeitshöhen 10 zu messen und so beispielsweise eine Neigung des Anbaugerätes 3 zu erfassen. Dafür kann die Lokalisierung der Montageposition 17 eines oder mehrerer Sensoren 12 notwendig sein.

Es kann vorgesehen sein, dass die montagepositionsspezifischen Kalibrationsdatensätze in einem Speicher der Steueranordnung 13 hinterlegt sind. Dieser Speicher ist hier und vorzugsweise ein lokaler Speicher der landwirtschaftlichen Arbeitsmaschine 1. Grundsätzlich kommt jedoch auch ein Cloud-Speicher oder dergleichen in Betracht. In dem Speicher können Kalibrationsdatensätze betreffend Montagepositionen 17 an mindestens zwei, vorzugsweise mindestens drei, unterschiedlichen Typen von Anbaugeräten 3 hinterlegt sein.

Wie im unteren Bereich von Fig. 1 gezeigt, ist hier und vorzugsweise vorgesehen, dass die Sensorhalterung 16 vom Sensor 12 getrennt an den unterschiedlichen Anbaugeräten 3 montierbar ist. Der Sensor 12 ist dann reversibel an der Sensorhalterung 16 montierbar. Es kann grundsätzlich vorgesehen sein, dass die Sensorhalterung 16 ein relativ günstiges Massenbauteil ist, während der Sensor 12 selbst relativ teuer ist. Das vorschlagsgemäße Verfahren ermöglicht die Wiederverwendung des teuren Sensors 12.

Aus Komfortgründen kann jedoch vorgesehen sein, dass die Sensorhalterung 16 an dem Anbaugerät 3 verbleibt. Dies hat zum einen im Rahmen der noch zu erläuternden Kalibrationsroutine deutliche Vorteile, ermöglicht jedoch zum anderen auch, die Sensorhalterung 16 stabil und aufwändiger zu montieren, während die Montage des Sensors 12 an der Sensorhalterung 16 selbst vorzugsweise relativ einfach ist. Dies ermöglicht auch die Wiederverwendung derselben Montageposition 17 bei erneutem Anbringen des Sensors 12. Entsprechend kann der montagepositionsspezifische Kalibrationsdatensatz auch der Sensorhalterung 16 an der entsprechenden Montageposition 17 zugeordnet sein. Um diese Zuordnung nun abzubilden, kann vorgesehen sein, dass die Sensorhalterung 16 ein Identifikationsmerkmal 18 aufweist.

Das Identifikationsmerkmal 18 kann von der Sensorhalterung 16 an die Steueranordnung 13 übertragen werden. In manchen Ausführungsbeispielen weist diese Sensorhalterung 16 jedoch keine eigene Elektronik auf. Insbesondere deshalb kann auch vorgesehen sein, dass der Sensor 12, insbesondere im montierten Zustand, das Identifikationsmerkmal 18 ausliest und an die Steueranordnung 13 überträgt. Vorzugsweise weist die Sensorhalterung 16 einen NFC-Tag auf. Der Sensor 12 kann dann einen NFC-Leser aufweisen, mittels dessen der Sensor 12 das Identifikationsmerkmal 18 der Sensorhalterung 16 ausliest und an die Steueranordnung 13 überträgt. Alternativ kann auch vorgesehen sein, dass der Benutzer 19 das Identifikationsmerkmal 18 über ein Eingabegerät, insbesondere ein Smartphone, eingeben oder mit dem Smartphone auslesen kann. Das Eingabegerät kommuniziert dann mit der Steueranordnung 13 oder ist Teil der Steueranordnung 13. Das Identifikationsmerkmal 18 kann somit insbesondere auch ein QR-Code sein, den der Benutzer 19 beispielsweise in einer dedizierten App ausliest. All diese Möglichkeiten erlauben eine schnelle Montage des Sensors 12, die direkt zur Nutzbarkeit des Sensors 12 zur Ermittlung der Arbeitshöhe 10 führt.

Zusätzlich oder alternativ kann vorgesehen sein, dass ein Benutzer 19 den montagepositionsspezifischen Kalibrationsdatensatz an einer Eingabeeinheit, vorzugsweise einer Eingabeeinheit einer landwirtschaftlichen Arbeitsmaschine 1, die mit der Steueranordnung 13 kommuniziert, auswählt, oder, dass die Steueranordnung 13 den montagepositionsspezifischen Kalibrationsdatensatz auf Basis des Identifikationsmerkmal 18 automatisch auswählt.

Weiter ist hier und vorzugsweise vorgesehen, dass die Steueranordnung 13 eine Kalibrationsroutine durchführt, in der die Steueranordnung 13 einen montagepositionsspezifischen Kalibrationsdatensatz erzeugt und vorzugsweise in dem Speicher abspeichert. Diese Kalibrationsroutine wird im Folgenden näher erläutert. Vorzugsweise ist vorgesehen, dass in der Kalibrationsroutine die Steueranordnung 13 eine Referenzhöhe und/oder eine Ausrichtung des Sensors 12 im montierten Zustand an der jeweiligen Montageposition 17 und/oder eine Lokalisierung der Montageposition 17 relativ zum Anbaugerät 3 in dem montagepositionsspezifischen Kalibrationsdatensatz abspeichert.

Die Kalibrationsroutine wird hier und vorzugsweise auf ebenem Grund durchgeführt. Dabei kann die Steueranordnung 13 dem Benutzer 19 mitteilen, dass er die landwirtschaftliche Arbeitsmaschine 1 und/oder das Anbaugerät 3 auf ebenem Grund abstellen soll und/oder annehmen, dass dies geschehen ist. Weiter ist vorzugsweise vorgesehen, dass das Anbaugerät 3 eine Referenzhöhe einnimmt. Beim Pflug 9 kann die Referenzhöhe beispielsweise bei einer Arbeitshöhe 10 von null festgelegt werden, wenn die Pflugscharen 14 auf dem Boden abgestellt sind. Bei einer Säeinrichtung kann es jedoch auch vorkommen, dass die niedrigste, einstellbare Höhe und eine übliche Arbeitshöhe 10 zu weit auseinander liegen, um den Sensor 12 so zu kalibrieren und während der Nutzung dennoch innerhalb der Spezifikation des Sensors 12 zu bleiben. Daher kann genauso vorgesehen sein, dass der Benutzer 19 die Referenzhöhe eingeben oder anderweitig bestimmen muss.

Vorzugsweise misst die Steueranordnung 13 mittels des Sensors 12 in der Kalibrationsroutine einen Abstand des Sensors 12 zum Boden und speichert diesen als Referenzhöhe ab. Besonders interessant daran ist, dass die Montageposition 17, die von der Steueranordnung 13 vorgegeben werden kann, vom Benutzer 19, insbesondere in Höhenrichtung, nicht genau eingehalten werden muss, da sie sich bei der Ermittlung der Arbeitshöhe 10 aus der Referenzhöhe herauskürzt. Auch in andere Richtungen kommt es aufgrund der in der Landwirtschaft vorherrschenden Toleranzen zumeist nicht auf eine hohe Präzision an.

Sofern das Anbaugerät 3 eigene Einstellmöglichkeiten der Arbeitshöhe 10 aufweist, kann vorgesehen sein, dass die während der Kalibrationsroutine vorliegenden Einstellungen ebenfalls in dem montagepositionsspezifischen Kalibrationsdatensatz abgespeichert werden und Änderungen dieser Einstellungen können zu einer Warnung an den Benutzer 19 führen oder gegebenenfalls mittels eines Modells des Anbaugerätes 3 bei der Ermittlung der Arbeitshöhe 10 berücksichtigt werden.

Weiter ist hier und vorzugsweise vorgesehen, dass die Steueranordnung 13 einen Benutzer 19 mittels einer Ausgabeeinheit in einem natürlichsprachigen Dialog durch die Kalibrationsroutine leitet, vorzugsweise, dass die Steueranordnung 13 dem Benutzer 19 eine Montageposition 17 vorgibt oder der Benutzer 19 die Montageposition 17, vorzugsweise per Spracheingabe, an die Steueranordnung 13 übermittelt. Zusätzlich oder alternativ kann vorgesehen sein, dass die Steueranordnung 13 dem Benutzer 19 eine Einstellung einer Arbeitshöhe 10 des Anbaugerätes 3 vorgibt oder der Benutzer 19 die Einstellung einer Arbeitshöhe 10, vorzugsweise per Spracheingabe, an die Steueranordnung 13 übermittelt, und/oder, dass die Steueranordnung 13 dem Benutzer 19 vorgibt, die landwirtschaftliche Arbeitsmaschine 1 und/oder das Anbaugerät 3 auf ebenem Grund abzustellen.

Der Dialog kann mittels eines Sprachausgabegerätes und/oder Spracheingabegerätes der landwirtschaftlichen Arbeitsmaschine 1 und/oder eines Smartphones durchgeführt werden. Genauso kann jedoch auch ein Terminal 15 der landwirtschaftlichen Arbeitsmaschine 1 und/oder das Smartphone ohne Spracheingabe und/oder -ausgabe verwendet werden.

Hier und vorzugsweise ist vorgesehen, dass die landwirtschaftliche Arbeitsmaschine 1 und/oder das Anbaugerät 3 während der Kalibrationsroutine auf ebenem Untergrund steht, dass der Benutzer 19 die Sensorhalterung 16 an einer Montageposition 17 an einem landwirtschaftlichen Anbaugerät 3 montiert und den Sensor 12 mit der Sensorhalterung 16 verbindet und dass die Steueranordnung 13 eine Kalibrationsroutine durchführt, in der die Steueranordnung 13 eine Referenzhöhe ermittelt und einen montagepositionsspezifischen Kalibrationsdatensatz erzeugt und vorzugsweise in dem Speicher hinterlegt.

Die Ausgabeeinheit kann das Terminal 15 oder das Smartphone sein und/oder das Sprachausgabegerät aufweisen.

Es kann vorgesehen sein, dass der Sensor 12 form- und/oder kraftschlüssig an der Sensorhalterung 16 montierbar ist, vorzugsweise, dass der Sensor 12 mittels einer Schnellspanneinrichtung und/oder mittels einer oder mehrerer Schrauben und/oder magnetisch an der Sensorhalterung 16 montierbar ist und/oder in die Sensorhalterung 16 einclipsbar ist. Bevorzugt ist der Sensor 12 mit handelsüblichem Werkzeug oder ganz ohne Werkzeug an der Sensorhalterung 16 montierbar.

Weiter ist hier und vorzugsweise vorgesehen, dass die Sensorhalterung 16 eine Batterie und/oder eine elektrische Verbindungseinheit, insbesondere ein Kabel oder eine Antenne, zur Verbindung mit der Steueranordnung 13 und/oder zur Energieübertragung von einer landwirtschaftlichen Arbeitsmaschine 1 an den Sensor 12, aufweist, vorzugsweise, dass die elektrische Verbindungseinheit eine Busanbindung, insbesondere eine ISOBUS- oder CAN Busanbindung, aufweist.

Mittels einer derart ausgestalteten Sensorhalterung 16 kann insbesondere der Sensor 12 mit Energie versorgt werden. Gleichzeitig oder alternativ kann die Sensorhalterung 16 so genutzt werden, um die Daten von dem Sensor 12 an die Steueranordnung 13 zu übertragen. Besonders interessant ist das, wenn die Steueranordnung 13 Teil der landwirtschaftlichen Arbeitsmaschine 1 ist oder die Verbindung zur Steueranordnung 13 über die landwirtschaftliche Arbeitsmaschine 1 läuft. Weist die Sensorhalterung 16 ein Kabel auf, das gegebenenfalls mit einem Bus der landwirtschaftlichen Arbeitsmaschine 1 verbindbar ist, und verbleibt die Sensorhalterung 16 an dem landwirtschaftlichen Anbaugerät 3, muss die Verkabelung nur einmal vorgenommen werden. Damit wird das "plug and play"-Konzept der Sensoranordnung 11 konsequent weitergedacht.

Die Batterie kann selbstverständlich alternativ ein Akku sein. Genauso kann der Sensor 12 auch eine eigene Batterie oder einen eigenen Akku aufweisen. Insbesondere ist auch denkbar, dass die Sensorhalterung 16 keinerlei Elektronik aufweist, wobei der NFC-Tag nicht als Elektronik zählt. Sofern das Anbaugerät 3 über eine eigene Energieversorgung verfügt, die gegebenenfalls von der landwirtschaftlichen Arbeitsmaschine 1 gespeist wird, kann der Sensor 12, insbesondere über die Sensorhalterung 16, auch mit dieser verbunden werden.

Weiter ist hier und vorzugsweise vorgesehen, dass der Sensor 12 ein, insbesondere kontaktloser, Abstandssensor ist, vorzugsweise, dass der Abstandssensor auf Basis elektromagnetischer Wellen oder akustischer Wellen oder mechanischer Abtastung funktioniert. Weiterhin ist es bevorzugt so, dass der Abstandssensor ein Radar-Sensor oder ein Lidar-Sensor oder ein optischer Sensor oder ein Ultraschall-Sensor ist, oder, dass der Sensor 12 ein Sensor 12, insbesondere Kraftsensor oder Wegsensor, an einem den Boden berührenden Bauteil, insbesondere einem Tastbügel, einer Schleifkufe oder einer Stützrolle, ist.

Es kann auch vorgesehen sein, dass die Sensoranordnung 11 mindestens zwei Sensoren 12 mit unterschiedlichen Funktionsprinzipien aufweist, die jeweils reversibel an der Sensorhalterung 16 montierbar sind. Dadurch, dass die Sensoren 12 modular nutzbar sind, können auch mehrere unterschiedliche Sensoren 12 vorhanden sein, die entsprechend abhängig vom Anbaugerät 3 und/oder der landwirtschaftlichen Tätigkeit, die durchgeführt werden soll, ausgewählt werden. Diese sind dann vorzugsweise jeweils mit derselben Sensorhalterung 16 kompatibel.

Hier und vorzugsweise umfassen die Anbaugeräte 3 unterschiedliche Typen von Anbaugeräten 3, für die die Steueranordnung 13 jeweils eine kopplungsformunabhängige Arbeitshöhe 10 ermittelt. Die unterschiedlichen Typen von Anbaugeräten 3 umfassen vorzugsweise mindestens einen Typ Bodenbearbeitungsgerät, weiter vorzugsweise mindestens zwei Typen Bodenbearbeitungsgeräte. Die Typen Bodenbearbeitungsgeräte umfassen vorzugsweise einen Pflug 9 und/oder einen Grubber und/oder eine Egge. Die unterschiedliche Typen von Anbaugeräten 3 umfassen vorzugsweise eine Sämaschine und/oder einen Kunstdüngerstreuer 8, insbesondere eine Säschar, und/oder ein Mähwerk und/oder eine Pickup und/oder ein Anbaugerät 3 mit einer Pickup, insbesondere eine Ballenpresse 7 oder einen Ladewagen.

Vorzugsweise sind zumindest einige der Anbaugeräte 3 eigene Fahrzeuge mit mindestens einer eigenen Achse und eigenen Rädern. Zusätzlich oder alternativ kann das Anbaugerät 3 ohne Achse oder Räder ausgestaltet sein und vom Traktor oder einem anderen Anbaugerät 3 getragen werden. Diesbezüglich wird auf die bereits erwähnten Geräteschnittstellen 2 verwiesen.

Wie bereits angedeutet, weisen diverse landwirtschaftliche Anbaugeräte 3 unterschiedliche relevante Arbeitshöhen 10 auf. Beispielhaft ist in Fig. 2a) ein Pflug 9 mit mehreren Pflugscharen 14 dargestellt. Jede dieser Pflugscharen 14 weist eine eigene Arbeitshöhe 10 auf. Wenn der Pflug 9 beispielsweise entlang seiner Längsachse stark geneigt ist, würde das Optimieren nur einer Arbeitshöhe 10 nicht zu optimalen Ergebnissen führen.

Es kann vorgesehen sein, dass die Steueranordnung 13 für mindestens eines der Anbaugeräte 3, insbesondere mehrere der unterschiedlich gekoppelten Anbaugeräte 3, mehrere kopplungsformunabhängige Arbeitshöhen 10 ermittelt, vorzugsweise, dass die Sensoranordnung 11 mehrere Sensoren 12 aufweist, dass die Steueranordnung 13 je einen Sensor 12 zur Ermittlung einer der kopplungsformunabhängige Arbeitshöhen 10 am selben Anbaugerät 3 verwendet, weiter vorzugsweise, dass die Steueranordnung 13 die mehreren Sensoren 12 jeweils zur Ermittlung von kopplungsformunabhängigen Arbeitshöhen 10 der unterschiedlich gekoppelten Anbaugeräte 3 verwendet.

Die Ausführungen zu dem einen Sensor 12 können für die übrigen Sensoren 12 entsprechend gelten, wobei auch unterschiedliche Ausgestaltungen der Sensoren 12 kombiniert werden können.

Es kann auch vorgesehen sein, dass die Steueranordnung 13 die Arbeitshöhe 10 zusätzlich aus einem anbaugerätespezifischen Kalibrationsdatensatz ermittelt und der anbaugerätespezifische Kalibrationsdatensatz eine Kinematik des jeweiligen Anbaugerätes 3 umfasst. Zusätzlich oder alternativ kann es so sein, dass die Steueranordnung 13 die Arbeitshöhe 10 zusätzlich aus einem Kopplungsdatensatz ermittelt und der Kopplungsdatensatz Maschinenparameter einer Geräteschnittstelle 2 zwischen der landwirtschaftlichen Arbeitsmaschine 1 und dem jeweiligen Anbaugerät 3 umfasst, vorzugsweise, dass der Kopplungsdatensatz Maschinenparameter eines Dreipunkt-Krafthebers 4 umfasst.

Mittels des anbaugerätespezifischen Kalibrationsdatensatzes und Kopplungsdatensatzes kann beispielsweise über eine Achstransformation mit Hilfe der Kinematik des Anbaugerätes 3 oder über bekannte Maschinenparameter der Geräteschnittstelle 2 die Anzahl an notwendigen Sensoren 12 zur Ermittlung mehrerer Arbeitshöhen 10 reduziert werden. Auch die Ermittlung einer einzelnen Arbeitshöhe 10 kann so gegebenenfalls verifiziert oder genauer vorgenommen werden. In einem bevorzugten Ausführungsbeispiel kann allerdings mindestens eine Arbeitshöhe 10 ohne Berücksichtigung der Maschinenparameter der Geräteschnittstelle 2 ermittelt werden.

Grundsätzlich kann der anbaugerätespezifische Kalibrationsdatensatz in dem montagepositionsspezifischen Kalibrationsdatensatz enthalten sein oder andersrum. Der Kopplungsdatensatz kann anbaugerätespezifisch sein, muss dies jedoch nicht. Beispielsweise kann dieser Längen von Hydraulikzylindern der Geräteschnittstelle 2 umfassen. Allgemein sind unter Maschinenparametern sämtliche Einstellungen, zugehörige Sensormesswerte und dergleichen zu verstehen. Hier und vorzugsweise betreffen die Maschinenparameter zumindest teilweise Maschinenparameter, die einen direkten Einfluss auf die Arbeitshöhe 10, die ermittelt werden soll, haben.

Auch möglich ist, dass die Steueranordnung 13 eine Arbeitshöhe 10 des Anbaugerätes 3 unter Berücksichtigung der ermittelten kopplungsformunabhängigen Arbeitshöhe 10 des Anbaugerätes 3 regelt, vorzugsweise, dass die Steueranordnung 13 die Arbeitshöhe 10 des jeweiligen Anbaugerätes 3 auf eine vorgegebene Soll-Arbeitshöhe 20 regelt und dafür die kopplungsformunabhängige Arbeitshöhe 10 zurückgeführt und mit der Soll-Arbeitshöhe 20 verrechnet wird, weiter vorzugsweise, dass eine Stellgröße der Regelung ein Maschinenparameter des Anbaugerätes 3 und/oder der Geräteschnittstelle 2 ist.

Bei allen genannten Größen der Regelung sind immer auch davon abhängige Größen umfasst, die den Zweck der Regelung ebenso erfüllen.

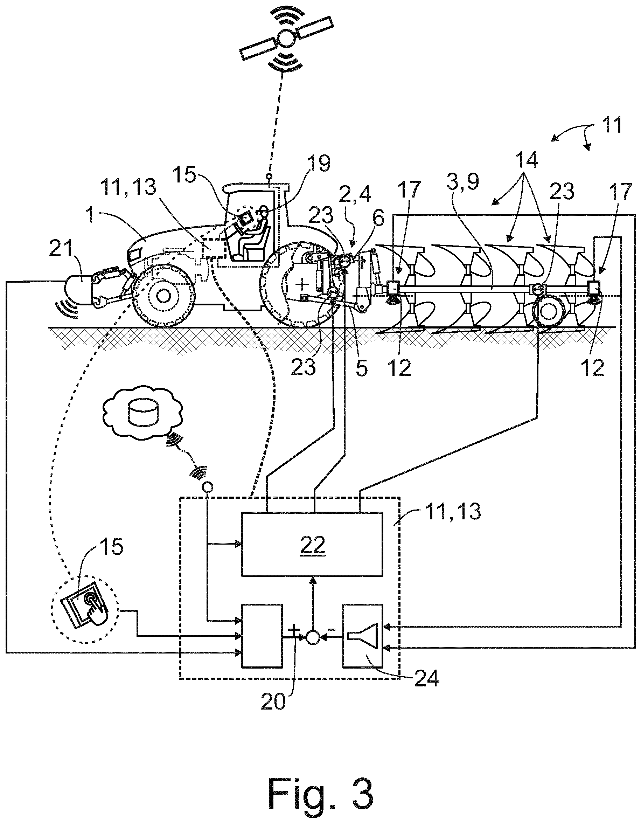

Mittels der vorschlagsgemäßen Sensoranordnung 11 wird eine wenig komplexe und effiziente Regelung der Arbeitshöhe 10 des Anbaugerätes 3 möglich. Die Soll-Arbeitshöhe 20 kann vom Benutzer 19 vorgegeben werden, dynamisch errechnet werden, aus einem Farm-Management-Information-System stammen und dergleichen. Vorzugsweise berücksichtigt die Soll-Arbeitshöhe 20 lokale Gegebenheiten des Feldes und/oder Arbeitshöhen 10 vergangener Arbeitsaufgaben, die insbesondere ebenfalls unter Ermittlung einer Arbeitshöhe 10 mit der vorschlagsgemäßen Sensoranordnung 11 durchgeführt wurden. Die Regelung ist schematisch in Fig. 3 dargestellt. Wie dargestellt kann die Soll-Arbeitshöhe 20 dabei aus einer Benutzereingabe, einem weiteren System oder einem Vorfeldsensor 21 hergeleitet werden. Zusammen mit einer Rückführung der gemessenen Arbeitshöhen 10 findet Sie Eingang in einen Regelungsblock 22, aus dem Sollwerte von Stellgrößen für Aktuatoren 23 hergeleitet werden.

Die Maschinenparameter des Anbaugerätes 3 können beispielsweise Einstellungen hydraulischer Zylinder sein, die eine Höhe des Anbaugerätes 3 verstellen. Weiterhin können die Maschinenparameter Einstellungen des Dreipunkt-Krafthebers 4 sein, insbesondere Einstellungen der Unterlenker 5 und/oder des Oberlenkers 6. Es versteht sich, dass die als Stellgrößen dienenden Maschinenparameter einen Einfluss auf die zu regelnde Arbeitshöhe 10 haben.

Hier und vorzugsweise ist es so, dass die Steueranordnung 13 mindestens zwei Arbeitshöhen 10 des Anbaugerätes 3 regelt, vorzugsweise, dass die Steueranordnung 13 eine Abweichung der Arbeitshöhen 10 an mindestens zwei Positionen des Anbaugerätes 3 und/oder eine Querneigung des Anbaugerätes 3 und/oder eine Längsneigung des Anbaugerätes 3 regelt, weiter vorzugsweise, dass die Steueranordnung 13 die Abweichung der Arbeitshöhen 10 und/oder die Querneigung und/oder die Längsneigung minimiert oder auf einen vorgegebenen Wert regelt.

Bei der Regelung der mehreren Arbeitshöhen 10 des Anbaugerätes 3 wird vorzugsweise die Kinematik des Anbaugerätes 3 berücksichtigt. Es kann auch vorgesehen sein, die Kinematik aus der Reaktion des Anbaugerätes 3 auf diverse Stellgrößenänderungen zu ermitteln. Dafür kann eine Testfahrt zur Einregelung des Anbaugerätes 3 vorgesehen sein.

Weiter ist hier und vorzugsweise vorgesehen, dass die Steueranordnung 13 zur Regelung der Arbeitshöhe 10 mindestens eine Stellgröße variiert, dass die mindestens eine Stellgröße ein Maschinenparameter der landwirtschaftlichen Arbeitsmaschine 1 und/oder des Anbaugerätes 3 ist, vorzugsweise, dass die Geräteschnittstelle 2 an die ein Anbaugerät 3 zumindest zeitweise gekoppelt ist ein Dreipunkt-Kraftheber 4 ist, weiter vorzugsweise, dass eine Stellgröße der Regelung ein Maschinenparameter des Dreipunkt-Krafthebers 4 ist.

Weitere Maschinenparameter, die als Stellgrößen dienen können, sind beispielsweise ein Luftdruck der Reifen der landwirtschaftlichen Arbeitsmaschine 1 und generell Maschinenparameter der landwirtschaftlichen Arbeitsmaschine 1, die eine Höhe der Geräteschnittstelle 2 beeinflussen können. Dies umfasst beispielsweise auch Achslasten. Nicht alle dieser Parameter sind jedoch immer ohne Weiteres einstellbar.

Als Stellgröße können auch Eingangsparameter eine Lageregelung und/oder Zugkraftregelung und/oder Mischregelung und/oder Schlupfregelung der landwirtschaftlichen Arbeitsmaschine 1 und deren Geräteschnittstelle 2 dienen. Diese Möglichkeit ist besonders interessant, da so auf bestehende Regelungen aufgesetzt werden kann.

Weiter ist hier und vorzugsweise vorgesehen, dass eines der Anbaugeräte 3 ein Pflug 9 ist, dass eine Stellgröße der Regelung ein Maschinenparameter, insbesondere ein Druck einer Hydraulik, des Pflugs 9 ist, und/oder, dass eines der Anbaugeräte 3 ein Grubber oder eine Egge ist, dass eine Stellgröße der Regelung ein Maschinenparameter, des Grubbers oder der Egge ist, vorzugsweise, dass der Maschinenparameter eine Walze oder ein Stützrad, insbesondere eine Höhe der Walze oder des Stützrades, des Grubbers oder der Egge ist.

Bisher wird die Höhenführung von Mähwerken sowie Pick-Ups häufig über direkten Bodenkontakt mit Schleifkufen, Stützrädern und dergleichen vorgenommen. Dies erhöht den Kraftstoffverbrauch und verringert die Flächenleistung durch Reibung oder Rollwiderstand. Weiterhin können Schäden am Feld oder der Feldvegetation verursacht werden. Auch das Gerät selbst unterliegt daher einem erhöhten Verschleiß. Teilweise erfolgt die Höhenführung hinter den eigentlichen Arbeitswerkzeugen und generell ist diese eher reaktiv und schwer mechanisch sauber zu regeln. All diese Nachteile können mittels der vorschlagsgemäßen Lehre teilweise oder vollständig vermieden werden.

Dabei ist insbesondere vorgesehen, dass die ermittelte kopplungsformunabhängige Arbeitshöhe 10 eine Position an dem Anbaugerät 3 betrifft, die in Fahrtrichtung der landwirtschaftlichen Arbeitsmaschine 1 vor einer Position einer Feldbearbeitung des Anbaugerätes 3 liegt, vorzugsweise, dass die Steueranordnung 13 mindestens eine Arbeitshöhe 10 an der Position der Feldbearbeitung vorausschauend regelt, insbesondere in Echtzeit.

Durch die vorausschauende Regelung oder generell die Ermittlung der Arbeitshöhe 10 vor einer Position der Feldbearbeitung kann die Arbeitshöhe 10 in Echtzeit an die lokalen Gegebenheiten angepasst werden. Vorliegend ist dabei, wie in Fig. 3 dargestellt, ein Filter 24 vorgesehen, der je nach Anwendung beispielsweise ein Tiefpassfilter sein kann. Beim Pflügen zum Beispiel wird eine schnelle Reaktion auf Schlaglöcher und dergleichen eher negativ oder gar nicht möglich sein, sodass diese aus der Messung herausgefiltert werden können. In anderen Anwendungsfällen, beispielsweise bei einem Kunstdüngerstreuer 8, kann auch eine Reaktion darauf vorgesehen sein.

Diese Anwendung zeigt auch, dass die Arbeitshöhe 10 grundsätzlich an diversen Positionen des landwirtschaftlichen Anbaugerätes 3, je nach Anwendungsfall, messbar ist. Diese Messbarkeit ist ein weiterer Vorteil der modularen Sensorik.

Weiter ist hier und vorzugsweise vorgesehen, dass die Soll-Arbeitshöhe 20 der Regelung während der Feldbearbeitung variiert, vorzugsweise, dass die Soll-Arbeitshöhe 20 ortsabhängig ist und/oder vom Benutzer 19 vorgegeben wird und/oder von der Steueranordnung 13 auf Basis von Messdaten eines Bodensensors ermittelt wird.

Mittels der vorschlagsgemäßen Lösung wird es möglich, die Arbeitshöhe 10 während der Feldbearbeitung an diversen Positionen des Feldes nach Bedarf anzupassen. Entsprechend kann insbesondere eine Planung der Feldbearbeitung vorgesehen sein, die bereits unterschiedliche Soll-Arbeitshöhen 20 für das Feld vorgibt. Diese können beispielsweise mittels eines GPS-Systems umgesetzt werden.

Vorgeschlagen wird außerdem gemäß einer weiteren Lehre, der eigenständige Bedeutung zukommt, eine Sensoranordnung 11, insbesondere zur Verwendung in einem vorschlagsgemäßen Verfahren, zur Ermittlung von kopplungsformunabhängigen Arbeitshöhen 10 mehrerer landwirtschaftlicher Anbaugeräte 3, wobei die Sensoranordnung 11 mindestens einen Sensor 12 zur Aufnahme von Messdaten und eine Steueranordnung 13 aufweist, wobei die Anbaugeräte 3 über mindestens eine Geräteschnittstelle 2 durch unterschiedliche Kopplungsformen mit einer landwirtschaftlichen Arbeitsmaschine 1 koppelbar sind.

Wesentlich ist nun, dass die Steueranordnung 13 eingerichtet ist, die kopplungsformunabhängigen Arbeitshöhen 10 der unterschiedlich gekoppelten Anbaugeräte 3 im gekoppelten Zustand unter Verwendung desselben Sensors 12 zu ermitteln und dass die Steueranordnung 13 eingerichtet ist, die ermittelten kopplungsformunabhängigen Arbeitshöhen 10 mittels der landwirtschaftlichen Arbeitsmaschine 1 anzuzeigen und/oder zur Steuerung und/oder Regelung der landwirtschaftlichen Arbeitsmaschine 1 zu verwenden, wobei eine kopplungsformunabhängige Arbeitshöhe eine Arbeitshöhe ist, die nicht relativ zur Geräteschnittstelle berechnet wird.

Vorgeschlagen wird außerdem gemäß einer weiteren Lehre, der eigenständige Bedeutung zukommt, eine landwirtschaftliche Arbeitsmaschine 1 mit einer vorschlagsgemä-ßen Sensoranordnung 11.

### Bezugszeichenliste

- 1: landwirtschaftliche Arbeitsmaschine
- 2: Geräteschnittstelle
- 3: landwirtschaftliches Anbaugerät
- 4: Dreipunkt-Kraftheber
- 5: Unterlenker
- 6: Oberlenker
- 7: Ballenpresse
- 8: Kunstdüngerstreuer
- 9: Pflug
- 10: Arbeitshöhe
- 11: Sensoranordnung
- 12: Sensor
- 13: Steueranordnung
- 14: Pflugschar
- 15: Terminal
- 16: Sensorhalterung
- 17: Montageposition
- 18: Identifikationsmerkmal
- 19: Benutzer
- 20: Soll-Arbeitshöhe
- 21: Vorfeldsensor
- 22: Regelungsblock
- 23: Aktuator
- 24: Filter

## Patentansprüche

1. Verfahren zur Ermittlung von kopplungsformunabhängigen Arbeitshöhen (10) mehrerer landwirtschaftlicher Anbaugeräte (3) mittels einer Sensoranordnung (11), wobei die Sensoranordnung (11) mindestens einen Sensor (12) zur Aufnahme von Messdaten und eine Steueranordnung (13) aufweist, wobei die Anbaugeräte (3) über mindestens eine Geräteschnittstelle (2) durch unterschiedliche Kopplungsformen mit einer landwirtschaftlichen Arbeitsmaschine (1) koppelbar sind, wobei die Anbaugeräte (3) zeitweise durch die unterschiedlichen Kopplungsformen mit der landwirtschaftlichen Arbeitsmaschine (1) gekoppelt werden,
**dadurch gekennzeichnet,**
**dass** die Steueranordnung (13) die kopplungsformunabhängigen Arbeitshöhen (10) der unterschiedlich gekoppelten Anbaugeräte (3) im gekoppelten Zustand unter Verwendung desselben Sensors (12) ermittelt und dass die Steueranordnung (13) die ermittelten kopplungsformunabhängigen Arbeitshöhen (10) mittels der landwirtschaftlichen Arbeitsmaschine (1) anzeigt und/oder zur Steuerung und/oder Regelung der landwirtschaftlichen Arbeitsmaschine (1) und/oder des landwirtschaftlichen Anbaugerätes (3) verwendet, wobei eine kopplungsformunabhängige Arbeitshöhe (10) eine Arbeitshöhe (10) ist, die nicht relativ zur Geräteschnittstelle (2) berechnet wird.

2. Verfahren nach Anspruch 1, **dadurch gekennzeichnet, dass** die Steueranordnung (13) die Arbeitshöhe (10) vollständig unabhängig von der Kopplungsform und vorzugsweise vollständig unabhängig von der Geräteschnittstelle (2) ermittelt, und/oder, dass die Steueranordnung (13) die Arbeitshöhen (10) primär, vorzugsweise ausschließlich, über den Sensor (12) ermittelt.

3. Verfahren nach Anspruch 1 oder 2, **dadurch gekennzeichnet, dass** der Sensor (12) an der landwirtschaftlichen Arbeitsmaschine (1) angebracht ist, vorzugsweise, dass der Sensor (12) ein optischer Sensor (12), insbesondere eine Kamera, ist.

4. Verfahren nach Anspruch 1 oder 2, **dadurch gekennzeichnet, dass** der Sensor (12) reversibel an den Anbaugeräten (3) montierbar ist, dass der Sensor (12) zur Ermittlung der Arbeitshöhe (10) mehrerer Anbaugeräte (3) genutzt wird und dafür jeweils an dem Anbaugerät (3) montiert wird.

5. Verfahren nach einem Anspruch 4, **dadurch gekennzeichnet, dass** der Sensor (12) ein, insbesondere kontaktloser, Abstandssensor ist, vorzugsweise, dass der Abstandssensor auf Basis elektromagnetischer Wellen oder akustischer Wellen oder mechanischer Abtastung funktioniert, weiter vorzugsweise, dass der Abstandssensor ein Radar-Sensor oder ein Lidar-Sensor oder ein optischer Sensor oder ein Ultraschall-Sensor ist, oder, dass der Sensor (12) ein Sensor (12), insbesondere Kraftsensor oder Wegsensor, an einem den Boden berührenden Bauteil, insbesondere einem Tastbügel, einer Schleifkufe oder einer Stützrolle, ist.

6. Verfahren nach einem der vorhergehenden Ansprüche, **dadurch gekennzeichnet, dass** die Anbaugeräte (3) unterschiedliche Typen von Anbaugeräten (3) umfassen, für die die Steueranordnung (13) jeweils eine kopplungsformunabhängige Arbeitshöhe (10) ermittelt, die unterschiedlichen Typen von Anbaugeräten (3) vorzugsweise umfassend mindestens einen Typ Bodenbearbeitungsgerät, weiter vorzugsweise mindestens zwei Typen Bodenbearbeitungsgeräte, die Typen Bodenbearbeitungsgeräte vorzugsweise umfassend einen Pflug (9) und/oder einen Grubber und/oder eine Egge, und/oder die unterschiedliche Typen von Anbaugeräten (3) umfassend eine Sämaschine und/oder einen Kunstdüngerstreuer (8), insbesondere eine Säschar, und/oder ein Mähwerk und/oder eine Pickup und/oder ein Anbaugerät (3) mit einer Pickup, insbesondere eine Ballenpresse (7) oder einen Ladewagen.

7. Verfahren nach einem der vorhergehenden Ansprüche, **dadurch gekennzeichnet, dass** die Steueranordnung (13) für mindestens eines der Anbaugeräte (3), insbesondere mehrere der unterschiedlich gekoppelten Anbaugeräte (3), mehrere kopplungsformunabhängige Arbeitshöhen (10) ermittelt, vorzugsweise, dass die Sensoranordnung (11) mehrere Sensoren (12) aufweist, dass die Steueranordnung (13) je einen Sensor (12) zur Ermittlung einer der kopplungsformunabhängige Arbeitshöhen (10) am selben Anbaugerät (3) verwendet, weiter vorzugsweise, dass die Steueranordnung (13) die mehreren Sensoren (12) jeweils zur Ermittlung von kopplungsformunabhängigen Arbeitshöhen (10) der unterschiedlich gekoppelten Anbaugeräte (3) verwendet.

8. Verfahren nach einem der vorhergehenden Ansprüche, **dadurch gekennzeichnet, dass** die Steueranordnung (13) eine Arbeitshöhe (10) des Anbaugerätes (3) unter Berücksichtigung der ermittelten kopplungsformunabhängigen Arbeitshöhe (10) des Anbaugerätes (3) regelt, vorzugsweise, dass die Steueranordnung (13) die Arbeitshöhe (10) des jeweiligen Anbaugerätes (3) auf eine vorgegebene Soll-Arbeitshöhe (20) regelt und dafür die kopplungsformunabhängige Arbeitshöhe (10) zurückgeführt und mit der Soll-Arbeitshöhe (20) verrechnet wird, weiter vorzugsweise, dass eine Stellgröße der Regelung ein Maschinenparameter des Anbaugerätes (3) und/oder der Geräteschnittstelle (2) ist.

9. Verfahren nach den Ansprüchen 7 und 8, **dadurch gekennzeichnet, dass** die Steueranordnung (13) mindestens zwei Arbeitshöhen (10) des Anbaugerätes (3) regelt, vorzugsweise, dass die Steueranordnung (13) eine Abweichung der Arbeitshöhen (10) an mindestens zwei Positionen des Anbaugerätes (3) und/oder eine Querneigung des Anbaugerätes (3) und/oder eine Längsneigung des Anbaugerätes (3) regelt, weiter vorzugsweise, dass die Steueranordnung (13) die Abweichung der Arbeitshöhen (10) und/oder die Querneigung und/oder die Längsneigung minimiert oder auf einen vorgegebenen Wert regelt.

10. Verfahren nach einem der Ansprüche 8 oder 9, **dadurch gekennzeichnet, dass** die Steueranordnung (13) zur Regelung der Arbeitshöhe (10) mindestens eine Stellgröße variiert, dass die mindestens eine Stellgröße ein Maschinenparameter der landwirtschaftlichen Arbeitsmaschine (1) und/oder des Anbaugerätes (3) ist, vorzugsweise, dass die Geräteschnittstelle (2) an die ein Anbaugerät (3) zumindest zeitweise gekoppelt ist ein Dreipunkt-Kraftheber (4) ist, weiter vorzugsweise, dass eine Stellgröße der Regelung ein Maschinenparameter des Dreipunkt-Krafthebers (4) ist.

11. Verfahren nach einem der vorhergehenden Ansprüche, **dadurch gekennzeichnet, dass** eines der Anbaugeräte (3) ein Pflug (9) ist, dass eine Stellgröße der Regelung ein Maschinenparameter, insbesondere ein Druck einer Hydraulik, des Pflugs (9) ist, und/oder, dass eines der Anbaugeräte (3) ein Grubber oder eine Egge ist, dass eine Stellgröße der Regelung ein Maschinenparameter, des Grubbers oder der Egge ist, vorzugsweise, dass der Maschinenparameter eine Walze oder ein Stützrad, insbesondere eine Höhe der Walze oder des Stützrades, des Grubbers oder der Egge ist.

12. Verfahren nach einem der vorhergehenden Ansprüche, **dadurch gekennzeichnet, dass** die ermittelte kopplungsformunabhängige Arbeitshöhe (10) eine Position an dem Anbaugerät (3) betrifft, die in Fahrtrichtung der landwirtschaftlichen Arbeitsmaschine (1) vor einer Position einer Feldbearbeitung des Anbaugerätes (3) liegt, vorzugsweise, dass die Steueranordnung (13) mindestens eine Arbeitshöhe (10) an der Position der Feldbearbeitung vorausschauend regelt, insbesondere in Echtzeit.

13. Verfahren nach einem der Ansprüche 8 bis 12, **dadurch gekennzeichnet, dass** die Soll-Arbeitshöhe (20) der Regelung während der Feldbearbeitung variiert, vorzugsweise, dass die Soll-Arbeitshöhe (20) ortsabhängig ist und/oder vom Benutzer (19) vorgegeben wird und/oder von der Steueranordnung (13) auf Basis von Messdaten eines Bodensensors ermittelt wird.

14. Sensoranordnung, insbesondere zur Verwendung in einem Verfahren nach einem der vorhergehenden Ansprüche, zur Ermittlung von kopplungsformunabhängigen Arbeitshöhen (10) mehrerer landwirtschaftlicher Anbaugeräte (3), wobei die Sensoranordnung (11) mindestens einen Sensor (12) zur Aufnahme von Messdaten und eine Steueranordnung (13) aufweist, wobei die Anbaugeräte (3) über mindestens eine Geräteschnittstelle (2) durch unterschiedliche Kopplungsformen mit einer landwirtschaftlichen Arbeitsmaschine (1) koppelbar sind,
**dadurch gekennzeichnet,**
**dass** die Steueranordnung (13) eingerichtet ist, die kopplungsformunabhängigen Arbeitshöhen (10) der unterschiedlich gekoppelten Anbaugeräte (3) im gekoppelten Zustand unter Verwendung desselben Sensors (12) zu ermitteln und dass die Steueranordnung (13) eingerichtet ist, die ermittelten kopplungsformunabhängigen Arbeitshöhen (10) mittels der landwirtschaftlichen Arbeitsmaschine (1) anzuzeigen und/oder zur Steuerung und/oder Regelung der landwirtschaftlichen Arbeitsmaschine (1) zu verwenden, wobei eine kopplungsformunabhängige Arbeitshöhe (10) eine Arbeitshöhe (10) ist, die nicht relativ zur Geräteschnittstelle (2) berechnet wird.

15. Landwirtschaftliche Arbeitsmaschine mit einer Sensoranordnung (11) nach Anspruch 14.

## Claims

1. A method for determining working heights (10) which are independent of the type of coupling of a plurality of agricultural implements (3) by means of a sensor system (11), wherein the sensor system (11) has at least one sensor (12) for receiving measurement data and a control system (13), wherein the implements (3) can be coupled to an agricultural working machine (1) via at least one equipment interface (2) by means of different types of coupling, wherein the implements (3) are temporarily coupled to the agricultural working machine (1) by means of the different types of coupling,
**characterized in that**
the control system (13) determines the coupling type-independent working heights (10) of the differently coupled implements (3) in the coupled state by using the same sensor (12) and **in that** the control system (13) displays the determined coupling type-independent working heights (10) by means of the agricultural working machine (1) and/or uses the determined coupling type-independent working heights (10) for the control and/or regulation of the agricultural working machine (1) and/or of the agricultural implement (3), wherein a coupling type-independent working height (10) is a working height (10) which is not calculated relative to the equipment interface (2).

2. The method according to claim 1, **characterized in that** the control system (13) determines the working height (10) entirely independently of the coupling type and preferably entirely independently of the equipment interface (2), and/or **in that** the control system (13) determines the working heights (10) primarily, preferably exclusively, via the sensor (12).

3. The method according to claim 1 or claim 2, **characterized in that** the sensor (12) is attached to the agricultural working machine (1), preferably **in that** the sensor (12) is an optical sensor (12), in particular a camera.

4. The method according to claim 1 or claim 2, **characterized in that** the sensor (12) can be reversibly mounted on the implements (3), **in that** the sensor (12) is used for the determination of the working height (10) of a plurality of implements (3) and is mounted on the respective implement (3) for this purpose.

5. The method according to claim 4, **characterized in that** the sensor (12) is a distance sensor, in particular a contactless distance sensor, preferably **in that** the distance sensor functions on the basis of electromagnetic waves or acoustic waves or mechanical sensing, more preferably **in that** the distance sensor is a radar sensor or a lidar sensor or an optical sensor or an ultrasonic sensor, or **in that** the sensor (12) is a sensor (12), in particular a force sensor or position sensor, on a component which contacts the ground, in particular a sensor arm, a glide skid or a support roller.

6. The method according to one of the preceding claims, **characterized in that** the implements (3) comprise different types of implements (3), for which the control system (13) respectively determines a coupling type-independent working height (10), the different types of implements (3) preferably comprising at least one type of ground working implement, more preferably at least two types of ground working implements, the types of ground working implements preferably comprising a plough (9) and/or a cultivator and/or a harrow, and/or the different types of implements (3) comprising a sowing drill and/or an artificial fertilizer spreader (8), in particular a sowing coulter, and/or a mowing assembly and/or a pickup and/or an implement (3) with a pickup, in particular a baler (7) or a loading vehicle.

7. The method according to one of the preceding claims, **characterized in that** the control system (13) determines a plurality of coupling type-independent working heights (10) for at least one of the implements (3), in particular for a plurality of the differently coupled implements (3), preferably **in that** the sensor system (11) has a plurality of sensors (12), **in that** the control system (13) uses one sensor (12) in each case for determining one of the coupling type-independent working heights (10) on the same implement (3), more preferably **in that** the control system (13) uses the plurality of sensors (12) for the respective determination of coupling type-independent working heights (10) for the differently coupled implements (3).

8. The method according to one of the preceding claims, **characterized in that** the control system (13) regulates a working height (10) of the implement (3) by taking the determined coupling type-independent working height (10) of the implement (3) into consideration, preferably **in that** the control system (13) regulates the working height (10) of the respective implement (3) to a predetermined nominal working height (20) and for this purpose, the coupling type-independent working height (10) is fed back and offset with the nominal working height (20), more preferably **in that** a manipulated variable of the regulation is a machine parameter of the implement (3) and/or of the equipment interface (2).

9. The method according to claim 7 and claim 8, **characterized in that** the control system (13) regulates at least two working heights (10) of the implement (3), preferably **in that** the control system (13) regulates a deviation of the working heights (10) at at least two positions of the implement (3) and/or a transverse inclination of the implement (3) and/or a longitudinal inclination of the implement (3), more preferably **in that** the control system (13) minimises the deviation of the working heights (10) and/or the transverse inclination and/or the longitudinal inclination or regulates the deviation to a predetermined value.

10. The method according to claim 8 or claim 9, **characterized in that** in order to regulate the working height (10), the control system (13) varies at least one manipulated variable, **in that** the at least one manipulated variable is a machine parameter of the agricultural working machine (1) and/or of the implement (3), preferably **in that** the equipment interface (2) onto which an implement (3) is at least temporarily coupled is a three point power lift (4), more preferably **in that** a manipulated variable of the regulation is a machine parameter of the three point power lift (4).

11. The method according to one of the preceding claims, **characterized in that** one of the implements (3) is a plough (9), **in that** a manipulated variable of the regulation is a machine parameter, in particular a pressure of the hydraulics, of the plough (9), and/or **in that** one of the implements (3) is a cultivator or a harrow, **in that** a manipulated variable of the regulation is a machine parameter of the cultivator or the harrow, preferably **in that** the machine parameter is a roller or a support wheel, in particular a height of the roller or of the support wheel of the cultivator or of the harrow.

12. The method according to one of the preceding claims, **characterized in that** the determined coupling type-independent working height (10) relates to a position on the implement (3) which lies in front of a field working position of the implement (3) in the direction of travel of the agricultural working machine (1), preferably **in that** the control system (13) regulates at least one working height (10) at the field working position in an anticipatory manner, in particular in real time.

13. The method according to one of claims 8 to 12, **characterized in that** the nominal working height (20) of the regulation varies during the field working, preferably **in that** the nominal working height (20) is location-dependent and/or is specified by the user (19) and/or is determined by the control system (13) on the basis of measurement data from a ground sensor.

14. A sensor system, in particular for use in a method according to one of the preceding claims, for determining working heights (10) which are independent of the type of coupling of a plurality of agricultural implements (3), wherein the sensor system (11) has at least one sensor (12) for receiving measurement data and a control system (13), wherein the implements (3) can be coupled to an agricultural working machine (1) via at least one equipment interface (2) by means of different types of coupling,
**characterized in that**
the control system (13) is configured to determine the coupling type-independent working heights (10) of the differently coupled implements (3) in the coupled state by using the same sensor (12) and **in that** the control system (13) is configured to display the determined coupling type-independent working heights (10) by means of the agricultural working machine (1) and/or to use the determined coupling type-independent working heights (10) for the control and/or regulation of the agricultural working machine (1), wherein a coupling type-independent working height (10) is a working height (10) which is not calculated relative to the equipment interface (2).

15. An agricultural working machine with a sensor system (11) according to claim 14.

## Revendications

1. Procédé de détermination de hauteurs de travail (10) indépendantes de la forme de l'attelage de plusieurs outils agricoles attelés (3) à l'aide d'un dispositif à capteur (11), le dispositif à capteur (11) présentant au moins un capteur (12), destiné à recueillir des données de mesure, et un dispositif de commande (13), les outils attelés (3) pouvant être accouplés à une machine de travail agricole (1) par l'intermédiaire d'au moins une interface d'outil (2), via des formes d'attelage différentes, les outils attelés (3) étant accouplés temporairement à la machine agricole (1) par les différentes formes d'attelage,
**caractérisé en ce que**
le dispositif de commande (13) détermine, à l'état accouplé, les hauteurs de travail (10) indépendantes de la forme de l'attelage des outils attelés (3) accouplés de manière différente, en utilisant le même capteur (12), et **en ce que** le dispositif de commande (13) visualise, au moyen de la machine agricole (1), les hauteurs de travail (10) indépendantes de la forme de l'attelage déterminées et/ou les utilise pour la commande et/ou le réglage de la machine agricole (1) et/ou de l'outil agricole attelé (3), une hauteur de travail (10) indépendante de la forme de l'attelage étant une hauteur de travail (10) qui n'est pas calculée par rapport à l'interface d'outil (2).

2. Procédé selon la revendication 1, **caractérisé en ce que** le dispositif de commande (13) détermine la hauteur de travail (10) de manière totalement indépendante de la forme de l'attelage et, de préférence, de manière totalement indépendante de l'interface d'outil (2), et/ou **en ce que** le dispositif de commande (13) détermine les hauteurs de travail (10) de façon primaire, de préférence exclusivement, par l'intermédiaire du capteur (12).

3. Procédé selon la revendication 1 ou 2, **caractérisé en ce que** le capteur (12) est monté sur la machine agricole (1), de préférence, **en ce que** le capteur (12) est un capteur optique (12), notamment une caméra.

4. Procédé selon la revendication 1 ou 2, **caractérisé en ce que** le capteur (12) peut être monté de façon réversible sur les outils attelés (3), **en ce que** le capteur (12) est utilisé pour déterminer la hauteur de travail (10) de plusieurs outils attelés (3) et est à cet effet monté respectivement sur l'outil attelé (3).

5. Procédé selon une revendication 4, **caractérisé en ce que** le capteur (12) est un capteur de distance, notamment sans contact, de préférence **en ce que** le capteur de distance fonctionne sur la base d'ondes électromagnétiques ou d'ondes acoustiques ou de palpage mécanique, en outre, de préférence, **en ce que** le capteur de distance est un capteur radar ou un capteur Lidar ou un capteur optique ou un capteur à ultrasons, ou **en ce que** le capteur (12) est un capteur (12), notamment un capteur de force ou un capteur de déplacement, sur un composant en contact avec le sol, notamment un étrier palpeur, un patin frottant ou un rouleau de support.

6. Procédé selon une des revendications précédentes, **caractérisé en ce que** les outils attelés (3) comprennent différents types d'outils attelés (3) pour lesquels le dispositif de commande (13) détermine respectivement une hauteur de travail (10) indépendante de la forme de l'attelage, les différents types d'outils attelés (3) comprenant de préférence au moins un type d'outil de travail du sol, en outre de préférence au moins deux types d'outils de travail du sol, les types d'outils de travail du sol comprenant de préférence une charrue (9) et/ou un décompacteur et/ou une herse, et/ou les différents types d'outils attelés (3) comprenant un semoir et/ou un distributeur d'engrais chimique (8), notamment un soc semeur, et/ou un mécanisme de coupe et/ou un ramasseur et/ou un outil attelé (3) doté d'un ramasseur, notamment une presse à balles (7) ou une remorque autochargeuse.

7. Procédé selon une des revendications précédentes, **caractérisé en ce que** le dispositif de commande (13) détermine pour au moins un des outils attelés (3), notamment plusieurs des outils attelés (3) à accouplements différents, plusieurs hauteurs de travail (10) indépendantes de la forme de l'attelage, de préférence **en ce que** le dispositif à capteur (11) présente plusieurs capteurs (12), **en ce que** le dispositif à capteur (11) utilise respectivement un capteur (12) pour déterminer l'une des hauteurs de travail (10) indépendantes de la forme de l'attelage, sur le même outil attelé (3), en outre de préférence **en ce que** le dispositif de commande (13) utilise la pluralité de capteurs (12) respectivement pour déterminer des hauteurs de travail (10) indépendantes de la forme de l'attelage des outils attelés (3) accouplés de manière différente.

8. Procédé selon une des revendications précédentes, **caractérisé en ce que** le dispositif de commande (13) règle une hauteur de travail (10) de l'outil attelé (3) en tenant compte de la hauteur de travail (10) indépendante de la forme de l'attelage déterminée de l'outil attelé (3), de préférence **en ce que** le dispositif de commande (13) règle la hauteur de travail (10) de l'outil attelé (3) respectif à une hauteur de travail de consigne (20) prédéfinie et qu'à cet effet la hauteur de travail (10) indépendante de la forme de l'attelage est renvoyée et compensée avec la hauteur de travail de consigne (20), en outre de préférence **en ce qu'**une grandeur réglante du réglage est un paramètre machine de l'outil attelé (3) et/ou de l'interface d'outil (2).

9. Procédé selon les revendications 7 et 8, **caractérisé en ce que** le dispositif de commande (13) règle au moins deux hauteurs de travail (10) de l'outil attelé (3), de préférence **en ce que** le dispositif de commande (13) règle un écart des hauteurs de travail (10) dans au moins deux positions de l'outil attelé (3) et/ou une inclinaison transversale de l'outil attelé (3) et/ou une inclinaison longitudinale de l'outil attelé (3), en outre de préférence **en ce que** le dispositif de commande (13) règle à un minimum ou à une valeur prédéfinie l'écart des hauteurs de travail (10) et/ou l'inclinaison transversale et/ou l'inclinaison longitudinale.

10. Procédé selon une des revendications 8 ou 9, **caractérisé en ce que**, en vue du réglage de la hauteur de travail (10), le dispositif de commande (13) fait varier au moins une grandeur réglante, **en ce que** la grandeur réglante, au nombre d'au moins une, est un paramètre machine de la machine agricole (1) et/ou de l'outil attelé (3), de préférence **en ce que** l'interface d'outil (2), à laquelle un outil attelé (3) est accouplé au moins temporairement, est un relevage à trois points (4), en outre de préférence **en ce qu'**une grandeur réglante du réglage est un paramètre machine du relevage à trois points (4).

11. Procédé selon une des revendications précédentes, **caractérisé en ce que** l'un des outils attelés (3) est une charrue (9), **en ce qu'**une grandeur réglante du réglage est un paramètre machine, notamment une pression d'une hydraulique, de la charrue (9), et/ou **en ce que** l'un des outils attelés (3) est un décompacteur ou une herse, **en ce qu'**une grandeur réglante du réglage est un paramètre machine du décompacteur ou de la herse, de préférence **en ce que** le paramètre machine est un rouleau ou une roue de support, notamment une hauteur du rouleau ou de la roue de support, du décompacteur ou de la herse.

12. Procédé selon une des revendications précédentes, **caractérisé en ce que** la hauteur de travail (10) indépendante de la forme de l'attelage déterminée concerne une position sur l'outil attelé (3) qui se situe avant une position d'un travail de champ de l'outil attelé (3), vu dans le sens du déplacement de la machine agricole (1), de préférence **en ce que** le dispositif de commande (13) règle de manière prédictive, notamment en temps réel, au moins une hauteur de travail (10) dans la position du travail du champ.

13. Procédé selon une des revendications 8 à 12, **caractérisé en ce que** la hauteur de travail de consigne (20) du réglage varie pendant le travail du champ, de préférence **en ce que** la hauteur de travail de consigne (20) est fonction du lieu et/ou est prédéfinie par l'utilisateur (19) et/ou est déterminée par le dispositif de commande (13) sur la base de données de mesure d'un capteur de sol.

14. Dispositif à capteur, destiné notamment à être utilisé dans un procédé selon une des revendications précédentes, aux fins de déterminer des hauteurs de travail (10) indépendantes de la forme de l'attelage, le dispositif à capteur (11) présentant au moins un capteur (12), destiné à recueillir des données de mesure, et un dispositif de commande (13), les outils attelés (3) pouvant être accouplés à une machine de travail agricole (1) par l'intermédiaire d'au moins une interface d'outil (2), via des formes d'attelage différentes,
**caractérisé en ce que**
le dispositif de commande (13) est conçu pour déterminer, à l'état accouplé, les hauteurs de travail (10) indépendantes de la forme de l'attelage des outils attelés (3), accouplés de manière différente, en utilisant le même capteur (12), et **en ce que** le dispositif de commande (13) est conçu pour visualiser, au moyen de la machine agricole (1), les hauteurs de travail (10) indépendantes de la forme de l'attelage déterminées et/ou les utiliser pour la commande et/ou le réglage de la machine agricole (1), une hauteur de travail (10) indépendante de la forme de l'attelage étant une hauteur de travail (10) qui n'est pas calculée par rapport à l'interface d'outil (2).

15. Machine de travail agricole dotée d'un dispositif à capteur (11) selon la revendication 14.
